## Europäisches Patentamt
## European Patent Office
## Office européen des brevets

(19)

(11) Numéro de publication: **0 114 849**
**B1**

(12) **FASCICULE DE BREVET EUROPEEN**

(45) Date de publication du fascicule du brevet:
**27.08.86**

(51) Int. Cl.⁴: **A 22 C 17/00**, A 22 C 21/00,
A 23 B 4/06

(21) Numéro de dépôt: **83902269.6**

(22) Date de dépôt: **25.07.83**

(86) Numéro de dépôt international:
**PCT/FR 83/00154**

(87) Numéro de publication internationale:
**WO 84/00472 (16.02.84 Gazette 84/5)**

(54) PROCEDE ET INSTALLATION DE HACHAGE ET D' EMBALLAGE DE CHAIR HACHEE SOUS ATMOSPHERE ET TEMPERATURE CONTROLEES ET LEUR APPLICATION A LA FABRICATION DE CHAIR HACHEE A PARTIR DE CARCASSES DE VOLAILLES.

(30) Priorité: 26.07.82 FR 8213003
18.10.82 FR 8217658

(43) Date de publication de la demande:
**08.08.84 Bulletin 84/32**

(45) Mention de la délivrance du brevet:
**27.08.86 Bulletin 86/35**

(84) Etats contractants désignés:
**AT BE CH DE GB LI LU NL SE**

(56) Documents cités:
**EP - A - 0 037 350
DE - A - 2 608 815
FR - A - 1 572 357
FR - A - 1 602 311
FR - A - 2 327 732
FR - A - 2 428 982
FR - A - 2 450 563
FR - A - 2 494 085
US - A - 352 058
US - A - 1 837 514
US - A - 3 729 773**

(73) Titulaire: **FRADIN, Maurice, Residence le Jean Bart 19, Esplanade de la Mer, F-85160 St. Jaen de Monts (FR)**

(72) Inventeur: **FRADIN, Maurice, Residence le Jean Bart 19, Esplanade de la Mer, F-85160 St. Jaen de Monts (FR)**

(74) Mandataire: **Marquer, Francis et al, 35, Avenue Victor Hugo Résidence Chamfleury, F-78180 Voisins-le-Bretonneux (FR)**

ACTORUM AG

## Description

L'invention se rapporte au hachage de viande et à l'emballage de la chair hachée, en particulier, en barquettes fermées par une feuille de matière plastique ou autre.

Les produits ainsi emballés (biftecks, viande de volailles) sont destinés, soit à être livrés en l'état, à la sortie de l'installation, soit refroidis à température plus basse dans une autre installation, qui n'est pas concernée par l'invention, pour être livrés surgelés.

Le hachage des viandes et l'emballage de la chair hachée, en particulier des biftecks hachés obtenus à partir de morceaux de viande amenés de manière continue ou par fournées posent, lorsque des quantités importantes de viande sont en jeu, le problème d'un refroidissement convenable de la viande pendant son broyage et sa mise en forme, l'échauffement engendré par les opérations de broyage favorisant le développement des germes et des exsudats ayant tendance à se produire si la viande hachée n'est pas maintenue à une température voisine de 0° ou légèrement inférieure.

Diverses solutions ont été proposées pour pallier ces inconvénients et, en particulier, selon la demande de Brevet Français N° 2 428 982, la mise en circulation d'un produit réfrigérant qui peut être du gaz carbonique ou tout autre produit réfrigérant ayant des propriétés comparables, dans les organes de broyage ou en dessous du tapis transporteur, avec l'inconvénient, outre le risque de provoquer l'adhérence de la viande hachée à la paroi du dispositif transporteur, de ne pas éliminer l'air du local, donc de ne pas éviter l'oxydation de la viande. Outre qu'il exige une installation de froid à l'intérieur du local, ce procédé entraîne une consommation relativement importante de produit réfrigérant lorsqu'il s'agit de traiter par exemple 300 ou 400 Kgs de viande par heure et il ne permet pas en pratique de maintenir une atmosphère exempte de germes et de maîtriser correctement la température.

Par ailleurs, après l'opération d'emballage, il est en pratique nécessaire d'injecter dans la barquette un gaz ou un mélange gazeux de conditionnement approprié, par exemple un mélange d'oxygène, de gaz carbonique et d'azote, qui assure la conservation des propriétés organoleptiques de la viande. Cette opération supplémentaire est évidemment onéreuse.

L'invention vise à simplifier le procédé et à le rendre moins onéreux, sans nuire à la qualité du produit final.

Elle a pout objet un procédé principalement caractérisé en ce que l'ensemble des opérations susvisées, y compris l'emballage, est conduit dans un ou plusieurs locaux formant un ensemble sensiblement étanche au gaz et thermiquement isolé, dans lequel on introduit de la neige carbonique fournie par une bouteille, une évacuation contrôlée et une régulation ou un réglage étant prévus pour maintenir, dans les différentes régions de cet ensemble, une atmosphère dont la composition et la température sont appropriées aux opérations qui y sont exécutées, ladite température étant comprise entre 0 et —4°C environ, l'opération d'emballage d'effectuant ainsi directement au contact du gaz carbonique.

L'invention a encore pour objet une installation pour la mise en œuvre du procédé ci-dessus.

Suivant un mode d'exécution préféré, les broyeurs ou hachoirs et le dispositif de formage et de mise en barquettes sont logés dans un local principal à un bout duquel la chair est introduite et à un autre bout duquel sont introduites les barquettes, une amenée contrôlée de neige carbonique fournie par une bouteille étant prévue au niveau des broyeurs ou hachoirs et une évacuation contrôlée au niveau du dispositif de formage, tandis que le dispositif d'emballage est avantageusement logé dans un local auxiliaire contigu au local principal, et en communication avec lui, à l'endroit de la sortie des barquettes, une amenée et une évacuation contrôlées de gaz ou de mélange gazeux supplémentaire de conditionnement étant prévues dans ledit local auxiliaire, ou dans le local principal, au voisinage de sa ou de ses ouvertures de communication avec le local auxiliaire.

Un autre objet ce l'invention est l'application du procédé susvisé au traitement en continu de carcasses de volailles pour la fabrication de viande hachée.

Jusqu'à présent, le traitement des carcasses de volailles n'a pas été à échelle industrielle en continu et en faisant appel à des moyens mécaniques.

L'un des problèmes posés par un tel traitement est le nombre très élevé de germes dans la peau de la volaille et à l'intérieur de sa carcasse, et le risque considérable de développement notable de ces germes au cours du traitement.

L'invention propose de remédier à cet inconvénient en mettant en œuvre un traitement continu des carcasses encore chaudes, comportant, avant l'étape finale de hachage et d'emballage conduite selon le procédé susvisé et l'étape de désossage qui la précède nécessairement, des étapes supplémentaires de préparation desdites carcasses en vue de supprimer tout risque de développement de germes.

L'un des objets de l'invention est donc un procédé de traitement, en continu, de carcasses de volailles pour la fabrication de viande hachée, comportant l'injection d'un produit réfrigérant à l'intérieur de la carcasse, caractérisé en ce que ladite opération d'injection, effectuée à partir des carcasses de volailles encore chaudes sortant de l'abattoir, utilise de la neige carbonique fournie par une bouteille et est suivie des opérations suivantes exécutées successivement en continu et sans interruption: une opération de flambage, exécutée à l'intérieur d'un tunnel dans lequel les carcasses défilent; une opération de refroidissement; une opération de désossage; une opération de hachage et d'emballage en atmosphère contrôlée comportant le produit réfrigérant é l'état gazeux et à basse température.

Suivant un mode d'exécution préféré, les trois premières opérations sont conduites à l'intérieur d'un local ventilé.

L'invention a encore pour objet une installation pour la mise en œuvre du procédé ci-dessus, principalement caractérisée par un local muni de cheminées d'aération et contenant un tunnel équipé de moyens d'injection d'un produit réfrigérant, de préférence de la neige carbonique, un tunnel de flambage, un tunnel de réfrigération, et un convoyeur assurant le défilement des carcasses.

D'autres particularités, ainsi que les avantages de l'invention apparaîtront clairement à la lumière de la description détaillée ci-après.

Au dessin annexé:

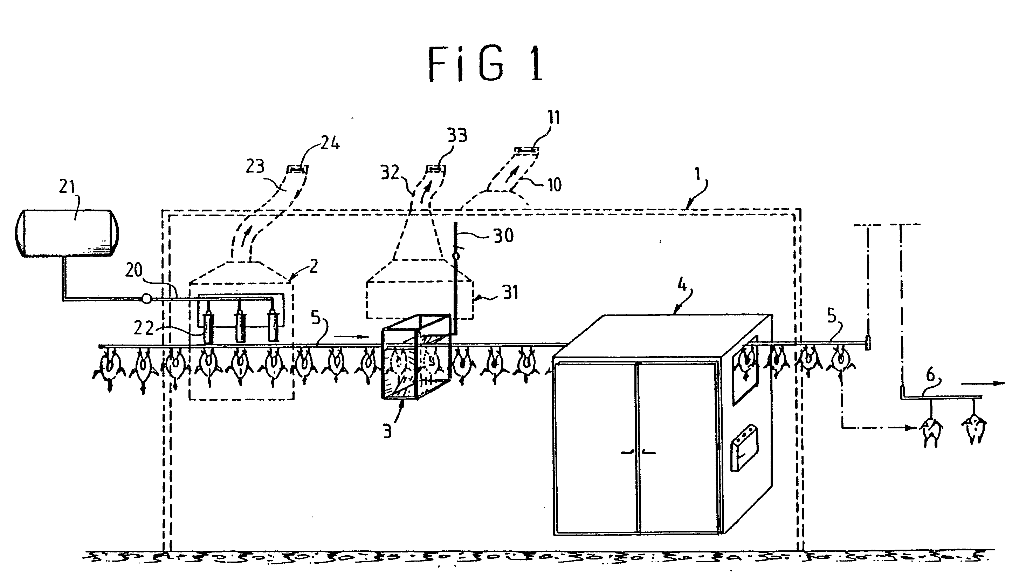

la figure 1 représente la partie d'une installation de traitement des carcasses de volailles conforme à l'invention, qui correspond aux trois premières étapes du procédé et

la figure 2 représente, vue en plan, la partie de l'installation qui correspond à la cinquième étape.

Un local 1 contient une machine d'injection de gaz carbonique, un tunnel de flambage 3 et un tunnel de réfrigération 4.

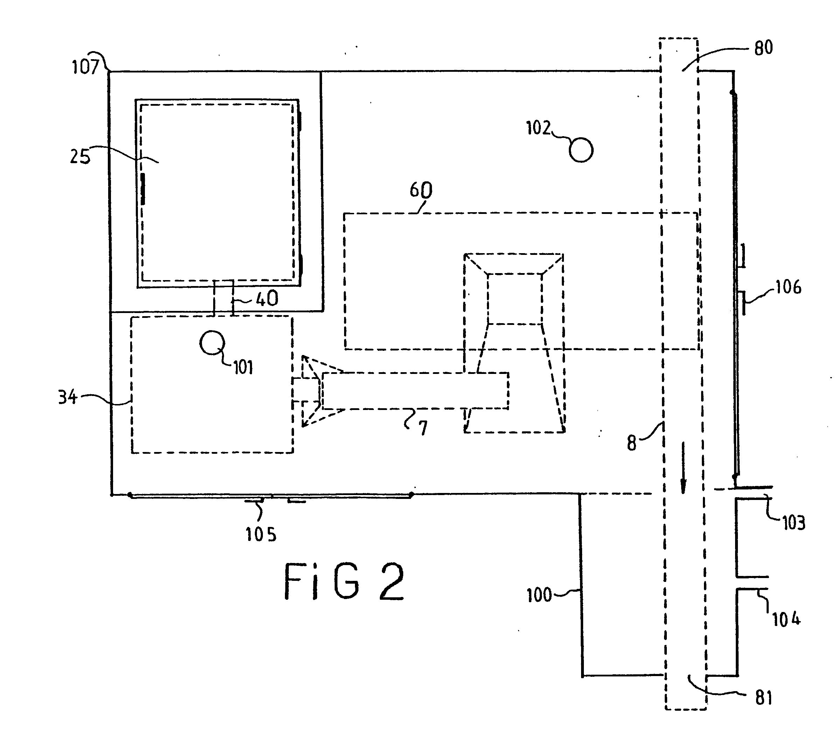

Les carcasses de volailles chaudes, c'est-à-dire sortant de l'abattoir, après éviscération, traversent rapidement le local 1 et les organes 2 à 4 au moyen d'un convoyeur 5, de type connu en soi, où elles sont suspendues accrochées par les pattes. A leur sortie du local, elles sont transférées dans une unité de désossage manuelle ou automatique. De telles unités sont connues en soi et ne font pas l'objet du présent brevet. A la sortie, les morceaux de viande sont immédiatement introduits dans l'installation de hachage et d'emballage de la figure 2.

La machine 2 a une ou plusieurs rampes d'injection qui comportent, de manière connue en soi, des tubulures 20 d'amenée de neige carbonique à partir d'un réservoir 21, auxquelles sont raccordés des organes injecteurs 22 munis d'un tube injecteur qui descend pour pénétrer dans la volaille. La machine 2 communique avec l'extérieur du local par une gaine 23 d'extraction des gaz munie d'un extracteur mécanique 24. Celui-ci crée une dépression dans la machine, qui a pour effet d'évacuer l'anhydride carbonique libéré.

Le tunnel 3 est muni de brûleurs reliés à une canalisation d'alimentation 30, et recouvert d'une hotte 31 reliée à l'extérieur du local par une gaine 32 munie d'un extracteur mécanique. Ce dispositif assure l'évacuation rapide des gaz engendrés par les brûleurs. Le flambage est rapide et superficiel.

Le local est avantageusement muni d'une cheminée générale d'aération 10 comportant un extracteur mécanique. L'injection de neige carbonique à l'intérieur de la carcasse empêche tout développement de germes pendant l'opération de flambage. Cette opération de flambage stérilise la peau des volailles, mais risquerait de provoquer échauffement de la carcasse, donc de stimuler la croissance des germes intérieurs, si l'injection préalable de neige carbonique n'avait pas au lieu. Les carcasses, une fois flambées, sont introduites dans une zone à basse température, ce qui évite qu'elles puissent sortir du local à une température trop élevée, pour laquelle le risque de développement des germes pendant le désossage serait considérable.

L'installation de hachage et d'emballage comprend, logés dans un local principal étanche aux gaz 107, par exemple deux hachoirs 25 et 34 reliées entre eux par un ou plusieurs organes 40 de transfert de la viande hachée, et une machine 60 formeuse de la viande hachée en biftecks ou analoques, reliée au dernier hachoir 34 par un organe 7 de transfert de la viande hachée. L'appareil 106 introduit les quantités de viande hachée et formée correspondant à des biftecks dans des barquettes amenées par un convoyeur 8 qui pénètre en 80 dans une fenêtre ménagée dans la paroi du local et agencée pour réaliser une étanchéité convenable aux gaz. Le convoyeur 8 traverse, à sa sortie de l'appareil 60, un local accessoire 100 qui contient une machine d'emballage non figurée: celle-ci procède à la fermeture des barquettes par une feuille de protection en matière plastique étanche aux gaz et les barquettes sortent du local 100, sur le convoyeur 8, par une fenêtre 81 ménagée dans la paroi de celui-ci et agencée pour réaliser une étanchéité convenable aux gaz.

En définitive, l'ensemble des opérations de broyage de la viande, de mise en forme de la viande et d'emballage sont conduites à l'intérieur d'un ensemble de carénage étanche, donc avec contact permanent de la viande avec l'atmosphère contrôlée qui règne à l'intérieur. Cette atmosphère est maintenue à une température inférieure à 0° de quelques degrés (par exemple, entre 0 et —4°C) et composée de gaz carbonique et, de préférence, d'un gaz ou mélange gazeux de conditionnement supplémentaire.

A cet effet, de la neige carbonique, ou tout autre produit réfrigérant ayant des propriétés comparables, est introduite dans le local 107 non figuré et aboutissant à un orifice 101 ménagé dans la paroi supérieure du local, par exemple au dessus de second hachoir 34. Une conduite d'évacuation part d'un autre orifice 102 ménagé en un emplacement approprié de la paroi supérieure du local, dans la région occupée par la machine 60 et est également munie d'une vanne, non figurée. Une troisième conduite 103 permet d'introduire, éventuellement, un mélange gazeux de conditionnement approprié dans le local accessoire 100 qui loge la machine d'emballage. Cette conduite est de préférence située au voisinage de la région de communication entre les deux locaux. Une conduite d'évacuation 104 est également prévue. Les conduites 103 et 104 sont munies d'une vanne de commande du débit et, éventuellement, un analyseur, non figuré, peut permettre de connaître la composition de l'atmosphère dans le local 100, en vue d'effectuer les réglages.

Il doit être bien compris que les appareils constitutifs de l'installation: hachoirs 25 et 34, machine formeuse 6 et machine d'emballage sont banals et que l'installation se caractérise principalement par le fait que tous ces appareils sont entièrement plongés, en fonctionnement, dans une même atmosphère réfrigérée au moyen d'une circulation libre de gaz carbonique et dont la température et la composition sont bien maîtrisées.

Le gaz carbonique est un produit industriel courant facile à distribuer à partir de bouteilles où il est à l'état liquide et sous pression; la température de la neige carbonique qui se forme immédiatement à la sortie de la bouteille (—79°C), bien que très inférieure à celle que l'on désire maintenir dans le local, reste compatible avec le résultat final recherché, c'est-à-dire qu'un réglage convenable des vannes d'amenée et d'échappement permettra d'obtenir la température souhaitée. Les organes actifs des appareils et la viande elle-même seront en permanence placés dans une circulation de gaz carbonique, de préférence additionné d'un gaz ou mélange gazeux de conditionnement. Cette circulation assurera un refroidisse-

ment parfaitement efficace de la viande à tous les stades de son traitement, même pour un débit de viande de plusieurs centaines de Kilos par heure, tandis que l'air atmosphérique se trouvera éliminé et remplacé par un gaz, exempt de bactéries et ayant les propriétés requises.

L'opération d'emballage s'effectuant elle-même en présence du gaz carbonique et, éventuellement, du mélange gazeux supplémentaire, la viande en barquettes, pendant la fermeture de celles-ci au moyen d'une feuille de matière plastique, se trouvera automatiquement placée au contact d'une atmosphère appropriée à la conservation de ses qualités organoleptiques, sans qu'il soit nécessaire, comme cela se fait actuellement, d'introduire ultérieurement dans les barquettes fermées le gaz approprié. Si le mélange gazeux auxiliaire contient un produit réfrigérant, celui-ci, contribuera évidemment à la réfrigération du local principal.

Dans le cas où il s'avèrerait préférable de réaliser des températures ou des compositions différentes du mélange gazeux dans certaines parties du volume global des locaux, par exemple dans le local accessoire, l'on pourra prévoir un cloisonnement et munir les cloisons d'ouvertures de tailles appropriées pour autoriser une circulation calibrée du gaz carbonique et du mélange gazeux supplémentaire.

On n'a pas figuré les moyens, connus en soi, d'introduire la viande dans le premier hachoir, soit de manière continue, soit en fournées. Bien entendu des portes, telles que 105-106, sont prévues, pour le nettoyage et l'entretien des appareils.

Il va de soi que les installations décrites ne présentent aucun caractère limitatif. Celle de la figure 2 sera utilisable aussi bien pour la chair de volailles que pour du bifteck.

## Revendications

1. Procédé de préparation et d'emballage de chair hachée, comportant un ou plusieurs broyages, la mise en forme de la chair broyée et son introduction dans des barquettes ou autres, et l'emballage par fermeture des barquettes, une partie au moins de ces opérations s'effectuant dans une ou plusieurs enceintes étanches, avec refroidissement au moyen d'air froid ou d'un produit réfrigérant, caractérisé en ce que l'ensemble des opérations susvisées, y compris l'emballage, est conduit dans un ou plusieurs locaux (107-100) formant un ensemble sensiblement étanche au gaz et thermiquement isolé, dans lequel on introduit (101) de la neige carbonique fournie par une bouteille, une évacuation contrôlée et une régulation ou un réglage étant prévus pour maintenir, dans les différentes régions de cet ensemble, une atmosphère dont la composition et la température sont appropriées aux opérations qui y sont exécutées, ladite température étant comprise ente 0 et —4°C environ, l'opération d'emballage s'effectuant ainsi directement au contact de gaz carbonique.

2. Procédé de préparation et d'emballage de chair hachée selon la revendication 1, caractérisé par l'introduction dans ledit ensemble étanche, d'un gaz ou mélange gazeux de conditionnement supplémentaire.

3. Installation pour la mise en œuvre de procédé selon la revendication 1, caractérisée en ce que les broyeurs ou hachoirs (25-34) et le dispositif de formage et de mise en barquettes (60) sont logés dans un local principal (107) à un bout duquel la viande est introduite et à un autre bout duquel sont introduites les barquettes (8), une amenée (40) contrôlée de neige carbonique fournie par une bouteille étant prévue au niveau des broyeurs ou hachoirs et une évacuation (102) contrôlée au niveau du dispositif de formage, tandis que le dispositif d'emballage est avantageusement logé dans un local auxiliaire (100) contigu au local principal et en communication avec lui, à l'endroit de la sortie des barquettes, une amenée (103) et une évacuation (104) contrôlées de gaz ou de mélange gazeux supplémentaire de conditionnement étant prévues dans ledit local auxiliaire ou dans le local principal au voisinage de sa ou de ses ouvertures de communication avec le local auxiliaire.

4. Procédé de traitement, en continu, de carcasses de volaille pour la fabrication de viande hachée, comportant l'injection d'un produit réfrigérant à l'intérieur de la carcasse, caractérisé en ce que ladite opération d'injection, effectuée à partir des carcasses de volailles encore chaudes sortant de l'abattoir, utilise de la neige carbonique fournie par une bouteille et est suivie des opérations suivantes exécutées successivement en continu et sans interruption: une opération de flambage, exécutée à l'intérieur d'un tunnel dans lequel les cracasses défilent; une opération de refroidissement; une opération de désossage; une opération de hachage et d'emballage en atmosphère contrôlée comportant le produit réfrigérant à l'état gazeux et à basse température, cette dernière opération étant conduite conformément au procédé selon la revendication 1.

5. Procédé selon la revendication 4, caractérisé en ce que les trois premières opérations sont conduites à l'intérieur d'un local ventilé.

6. Installation pour la mise en œuvre du procédé selon la revendication 5, caractérisée par un local (107) muni de cheminées d'aération (10-23-32) et contenant un tunnel (2) équipé de moyens (20-22) d'injection d'un produit réfrigérant, de préférence de la neige carbonique, un tunnel (3) de flambage, un tunnel (4) de réfrigération, et un convoyeur (5) assurant le défilement des carcasses.

## Patentansprüche

1. Verfahren zur Herstellung und Verpackung von Hackfleisch, bestehend aus mehreren Zerkleinerungsvorgängen, der Aufbereitung des zerkleinerten Fleiches, dem Einfüllen in Schalen oder ähnliches und die Verpackung durch Schliessung der Schalen, wobei mindestens ein Teil dieser Arbeitsgänge in einem oder mehreren undurchlässigen Räumen stattfindet und unter Kühlung durch gekühlte Luft oder ein Kühlmittel, dadurch gekennzeichnet, dass alle obigen Arbeitsgänge, die Verpackung eingeschlossen, in einem oder mehreren Räumen (107-100) ausgeführt werden, welche eine im wesentlichen gasundurchlässige und wärmeisolierte Einheit bilden, in die Trockeneis aus der Flasche (101) eingeführt wird, und eine kontrollierte Abführung und eine Regulierung oder Steuerung vorgesehen sind, um in den verschiedenen Zonen dieser Einheit eine Atmosphäre aufrechtzuerhalten, deren Zusammensetzung und Temperatur den dort ausgeführten Arbeitsgängen angepasst ist, wobei besagte Temperatur etwa zwischen 0 und —4°C liegt und die Verpackung so direkt unter Kontakt mit dem Trockeneis stattfindet.

2. Verfahren zur Herstellung und Verpackung von Hackfleisch nach Anspruch 1, gekennzeichnet durch die Einführung eines Gases oder Gasgemisches zur zusätzlichen Aufbereitung in besagte undurchlässige Einheit.

3. Vorrichtung zur Ausführung des Verfahrens nach Anspruch 1, dadurch gekennzeichnet, dass die Zerkleinerer oder Hacker (25-34) und die Vorrichtung zur Aufbereitung und Einfüllung in Schalen (60) im Hauptraum (107) untergebracht sind, an dessen einem Ende das Fleisch eingeführt wird und an einem anderen Ende die Schalen (8) und eine gesteuerte Zufuhr (40) von Trockeneis aus der Flasche in Höhe der Zerkleinerer oder Hacker vorgesehen ist und eine gesteuerte Abführung (102) in Höhe der Aufbereitungsvorrichtung, während die Verpackungsvorrichtung vorteilhafterweise in einem Nebenraum (100) untergebracht ist, der an den Hauptraum angeschlossen und mit ihm am Schalenausgang verbunden ist, und die gesteuerte Zu- (103) und Abfuhr (104) eines Gases oder Gasgemischs zur zusätzlichen Aufbereitung in besagtem Nebenraum oder in besagtem Hauptraum in der Nähe seiner Öffnung(en) die ihn mit dem Nebenraum verbinden, vorgesehen sind.

4. Verfahren zur kontinuierlichen Aufbereitung von Geflügelrümpfen zur Herstellung von Hackfleisch, das die Einführung eines Kühlproduktes, ins Innere des Rumpfes beinhaltet, dadurch gekennzeichnet, dass besagter Einführungsvorgang, der an noch warmen, aus dem Schlachthaus kommenden, Rümpfen durchgeführt wird, Trockeneis aus der Flasche verwendet und von folgenden Arbeitsgängen gefolgt wird, die nacheinander kontinuierlich und ohne Unterbrechung ausgeführt werden: ein Senggang, der im Inneren eines Tunnels ausgeführt wird, den die Rümpfe durchlaufen; ein Kühlgang, ein Entknochungsgang; ein Hack- und Verpackungsgang unter kontrollierter Atmosphäre mit einem gasförmigen Kühlprodukt niederer Temperatur, wobei letzterer Gang gemäss dem Verfahren nach Anspruch 1 ausgeführt wird.

5. Verfahren nach Anspruch 4, dadurch gekennzeichnet, dass die ersten drei Arbeitsgänge im Inneren eines belüfteten Raumes ausgeführt werden.

6. Vorrichtung zur Ausführung des Verfahrens nach Anspruch 5, gekennzeichnet durch einen Raum (107) mit Belüftungsschächten (10-23-32), der einen Tunnel (2) enthält, mit Mitteln (20-22) zur Einführung eines Kühlproduktes, vorzugsweise Trockeneis einem Sengtunnel (3), einem Kühltunnel (4) und einer Fördereinrichtung, welche den Transport der Rümpfe bewerkstelligt.

**Claims**

1. Process for the preparation and packaging of minced mean, including one or more mincing stages, the shaping of the ground meat and its introduction into open or other containers, and the packaging by closing the containers, at least part of said operations being carried out in one or more sealed rooms which are cooled by means of cooled air or a refrigerant, characterized in that all the above-mentioned operations, including the packaging, are carried out in one or more sealed rooms (107-100) forming a substantially gas-tight and thermally insolated whole, wherein dry ice (101) is introduced from a bottle, a controlled discharge and a regulation or adjustement being provided to maintain, in the various regions of this whole, an atmosphere with a composition and temperature appropriate to the operations carried out in them, said temperature being comprised approximately between 0 and —4°C, the pre-packaging operation thus being carried out in direct contact with the dry ice.

2. A process for the preparation and pre-packaging of minced meat according to claim 1, characterized by the introduction into the sealed whole of a gas or gaseous mixture for supplementary conditioning.

3. Installation for carrying out the process according to claim 1, characterized in that the grinders or mincers (25-34) and the device for shaping and placing in open containers (60) are housed in a main room (107) at one end of which the meat is introduced and at the other end of which the open containers (8) are introduced, a controlled inlet (40) for dry ice in bottles being provided at the level of the grinders or mincers and a controlled outlet (102) at the level of the shaping device, while the pre-packaging device is advantageously housed in a secondary room (100) adjoining the main room and communicating therewith, where the open containers leave it, a controlled inlet (103) and outlet (104) for gas or for the supplementary mixture of gases for conditioning are provided in said secondary room or in the main room, in the vicinity of its opening(s) for communicating with the secondary room.

4. Continuous treatment process for poultry carcasses for the manufacture of minced meat, comprising the injection of a refrigerant in the carcass, characterized in that said injection operation, taking place when the still warm carcasses leave the abattoir, use dry ice from a bottle and is followed by the following operations carried out successively continuously and without interruption: an operation of singeing, carried out inside a tunnel through which the carcasses pass; an operation of cooling; an operation of de-boning; an operation of mincing and pre-packaging in a controlled atmosphere comprising the refrigerant in gas form and at a low temperature, this latter operation being conducted according to the process of claim 1.

5. Process according to claim 4, characterized in that the first three operations are carried out inside a ventilated room.

6. Installation for carrying out the process according to claim 5, characterized by a room (107) with ventilation shafts (10-23-32) and containing a tunnel (2) equipped with injection means (20-22) for a refrigerant, preferably dry ice, a tunnel (3) for singeing, a tunnel (4) for refrigeration, and a conveyor (5) ensuring the movement of the carcasses.

# FiG 1

FiG 2

0 114 849